# EUROPEAN PATENT APPLICATION

(11) **EP 3 346 562 A1**
(43) Date of publication of application: **11.07.2018**
(21) Application number: 17290001.1
(22) Date of filing: 06.01.2017
(51) Int. Cl.: H02B 13/00, H02G 5/06, F16L 27/02

(54) **A CONNECTION DEVICE FOR CONNECTING TOGETHER TWO PIECES OF GAS-INSULATED EQUIPMENT**

(71) Applicant: General Electric Technology GmbH, 5400 Baden (CH)
(72) Inventor: DE-Brito, Luis, 73106 Aix (FR); Barbe, Tommy, 73106 Aix (FR)
(74) Representative: Fischer, Michael Maria

(57) **Abstract**

The invention concerns a connection device (10) for connecting together two pieces of gas-insulated equipment,
the connection device comprising a first flange (12) and a second flange (14),
a first tubular sleeve (16), a second tubular sleeve (18),
characterized in that the connection device (10) further comprises an annular bushing (20) which connects in leak-tight manner the free ends (16a, 18a) of the two tubular sleeves (16, 18) and in that
said bushing (20) is slidably linked with the free end (16a) of the first tubular sleeve (16) and is articulated with the free end (18a) of the second tubular sleeve (18) by a ball joint connection.

## Description

### TECHNICAL FIELD

The invention relates to a device for connecting together two pieces of gas-insulated equipment.

The invention relates more particularly to a connection device making it possible to compensate for possible defects in positioning and aligning one piece of equipment relative to another.

### PRIOR ART

An electrical installation for transporting high voltage electricity comprises several pieces of equipment connected to one another. In particular, such a piece of equipment comprises one or more electrical components that are arranged inside a metal casing. Electrical insulation between the components and the casing is provided by a dielectric gas.

The electrical equipment may comprise equipment for transporting energy, comprising one or more electrical conductors arranged in a tubular sleeve, or a power transformer comprising a leak-tight tank containing the electrical components and the dielectric gas.

Pieces of equipment are electrically connected to one another via openings made in their outer casings, i.e. in the above-described example, the tubular sleeve and the tank. These openings are connected together in leak-tight manner and one or more electrical connection components pass through them.

Different kinds of equipment are manufactured with various dimensional tolerances and are designed to operate under specific temperature conditions. Also, a power transformer is an equipment of considerable volume and weight (greater than 100 (metric) tons (t)) in comparison with equipment for transporting energy.

Thus, it is particularly complex to accurately position the openings of their casings relative to each other.

In order to limit costs and excessively complex manipulations that make it possible to obtain good positioning of the pieces of equipment relative to each other, provision may be made to connect the two openings together by means of a connection device suitable for compensating for defects in relative positioning.

A first type of connection device is constituted by two flanges, each being intended for connection to a flange associated with a piece of equipment. Each flange of the connection device includes openings that are oblong, thereby making it possible to compensate for a defect of axial alignment with the associated flange.

The two flanges of the connection device are also positioned in two planes that are perpendicular so as to be able to compensate for defects in positioning in all directions. A rigid tubular element is arranged between the flanges so as to connect together internal volumes of the two casings in leak-tight manner.

Such a type of connection device does not however make it possible to compensate for defects in orientation of pieces of equipment relative to one another. Also, the cost of manufacturing and installing that connection device is relatively high.

Another type of connection device also comprises two flanges, each being intended for connection to an associated opening in a piece of equipment, the flanges being connected to each other by means of a flexible sleeve.

The connection device also comprises means for positioning the two flanges relative to each other so that their relative positions correspond to the relative positions of the two flanges associated with the pieces of equipment to be connected together.

According to a first embodiment, those relative positioning means comprise a structure, or rigid cage, that is fastened to one of the two flanges and a system for adjusting the position of the other flange relative to the first flange and to the rigid cage.

That adjustment system consists of a mechanical actuator unit and tie rods that extend between the rigid cage and the second movable flange.

By varying the lengths of the tie rods and the actuators, it is thus possible to adapt the position of the movable flange compared to the other flange as a function of the relative positioning of the two pieces of equipment.

According to another embodiment of the positioning means disclosed in document FR1453564, comprises tie rods directly connected to the flanges, to adjust the relative position of the flanges.

Such positioning means comprising the connection device is again relatively complex and is thus expensive to implement. Also, said device is heavy and difficult to adjust for an operator mounting the connection device.

Also, using a flexible sleeve increases the cost of the connecting device.

The invention aims to provide a device for connecting together two pieces of gas-insulated equipment, the device having a structure that is relatively simple both in its implementation and in its design, so as to reduce the total cost.

### SUMMARY OF THE INVENTION

The invention concerns a connection device for connecting together two pieces of gas-insulated equipment,
the connection device comprising
a first flange and a second flange,
a first tubular sleeve extending from the first flange towards the second flange,
a second tubular sleeve extending from the second flange towards the first flange,
wherein a free end of the first tubular sleeve is connected in a leak-tight manner with a free end of the second tubular sleeve,
characterized in that the connection device further comprises an annular bushing which connects in leak-tight manner the free ends, of the two tubular sleeves and in that
said bushing is slidably linked with the free end of the first tubular sleeve and is articulated with the free end of the second tubular sleeve by a ball joint connection.

Connecting the free ends of the two tubular sleeves with such an annular bushing permits an automatic correction of the relative positioning of the flanges. Hence, there is no need for an operator to adjust the positions of the various parts of the device while mounting it on the installation.

Preferably, a first face of the bushing is cylindrical and cooperates with a complementary cylindrical face of the free end of said first tubular sleeve,

Preferably, a second face of the bushing has a spherical shape and cooperates with a complementary spherically shaped face of the free end of said second tubular sleeve,

Preferably, the first face of the bushing is a radially outer annular face of the bushing and the second face of the bushing is a radially inner annular face of the bushing,

Preferably, the free end of the first tubular sleeve comprises a radially inner annular face which is cylindrical, the main axis of which is a main axis A of the first tubular sleeve and which cooperates and contacts with the first face of the bushing,

Preferably, the second face of the bushing is of a concave shape and the free end of the second tubular sleeve comprises a radially outer annular face which is convex, bulging outwards and of a spherical shape, which cooperates and contacts with the second face of the bushing,

Preferably, it comprises a plurality of annular gaskets arranged between the bushing and each free end, of the tubular sleeves,

Preferably, the connection device further comprises a plurality of tie rods, each tie rod being of length that may be modified in order to adjust the length of the tie rods according to the respective position of the flanges relative to each other and each tie rod cooperates with each flange by means of a spherical washer.

The invention also concerns an electrical installation for transporting high voltage electricity comprising a first piece of equipment comprising a casing and an opening arranged on said casing, and a second piece of equipment comprising a casing and an opening arranged on said casing, wherein the two pieces of equipment are connected to one another, characterized in that it comprises a connection device according to any of preceding claims wherein the first flange is connected to the opening of the first piece of equipment and the second flange is connected to the opening of the second piece of equipment.

The invention also concerns an electrical installation for transporting high voltage electricity comprising a first piece of equipment comprising a casing and an opening arranged on said casing, and a second piece of equipment comprising a casing and an opening arranged on said casing, wherein the two pieces of equipment are connected to one another, characterized in that it comprises two connection devices according to any of claims to wherein the first flange of each connection device is connected to the opening of each one of the first piece of equipment and the second piece of equipment, and the second flanges of the two connection devices are connected one to another.

Preferably, the second flanges of the two connection devices are connected to an intermediary flange,

Preferably, the two second flanges and the intermediary flange are parts of a single piece.

The invention also concerns an electrical installation for transporting high voltage electricity comprising a first piece of equipment comprising a casing and an opening arranged on said casing, and a second piece of equipment comprising a casing and an opening arranged on said casing, wherein the two pieces of equipment are connected to one another, characterized in that it comprises two connection devices according to any of claims to wherein the second flange of each connection device is connected to the opening of each one of the first piece of equipment and the second piece of equipment, and the first flanges of the two connection devices are connected one to another.

Preferably, the first flanges of the two connection devices are connected to an intermediary flange,

Preferably, the two first flanges and the intermediary flange are parts of a single piece.

### BRIEF DESCRIPTION OF THE DRAWING

Other characteristics and advantages of the invention appear on reading the following detailed description, for understanding of which reference is made to the accompanying drawing, in which:
Figure 1 is a diagram in section along an axial plane of a connection device of the invention implementing a simple angular correction;
Figure 2 is a more detailed view of the connection between the free ends of the tubular sleeves as represented in fig. 1;
Figs. 3 and 4 are views similar to the one of figure 1, showing different uses of two connection devices of the invention implementing combined angular corrections.

### DETAILED DESCRIPTION OF PARTICULAR EMBODIMENTS

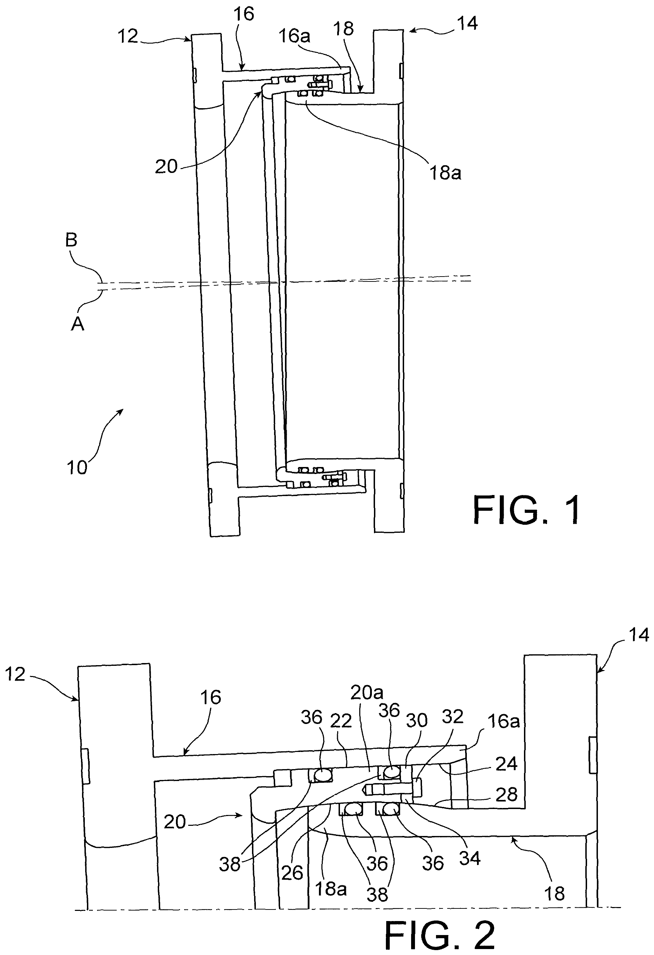

Figure 1 shows a connection device 10 for connecting two pieces of gas-insulated equipment (not shown). Each piece of equipment includes a casing filled with dielectric gas and electrical components that are at electric potentials that are different from the electric potential of the casing.

The casing of each piece of equipment includes an opening that is intended for connection to the other piece of equipment, and that has an electrical connection component passing there through.

The aim of the connection device 10 is to connect together the openings made in the two casings in leak-tight manner.

To this end, the connection device 10 comprises two flanges 12, 14 and each flange 12, 14 is designed for being fastened to an opening of a casing. Sealing means are arranged between each flange 12, 14 and the associated opening of the casing.

A first flange 12 comprises a first tubular sleeve 16 extending along the main axis A of the first flange 12 towards the second flange 14. Then, the first sleeve 16 extends perpendicularly to the main plane of the first flange 12.

The second flange 14 comprises a second tubular sleeve 18 extending along the main axis B of the second flange 14 towards the first flange 12. Then, the second sleeve 18 extends perpendicularly to the main plane of the second flange 14.

The first tubular sleeve 16 comprises a free end 16a which is connected with a free end 18a of the second tubular sleeve 18 in a leak-tight manner.

The means for connecting together the free ends 16a, 18a of the tubular sleeves 16, 18 are designed to compensate a defect in the relative positioning of the opening in one casing relative to the opening of the other casing which may consist in an offset that may be horizontal or vertical, and also in an opening being inclined or turned relative to the other.

The connection device 10 represented on figs 1 and 2 is designed in order to permit a relative displacement of the free ends 16a, 18a of the tubular sleeves 16, 18 along the main axis of one sleeve, here along the main axis A of the first sleeve.

The connection device 10 is designed to achieve a simple angular correction, which is to permit a rotation of one sleeve 16, 18 relative to the other around a single point located on the main axis B of the second sleeve 18. This point is preferably located at the free end 18a of the second sleeve 18.

This rotation allows compensating the relative inclination of turn of one casing relative to the other.

The connecting device 10 further comprises an annular bushing 20 which is arranged between the free ends 16a, 18a of the tubular sleeves 16, 18. This bushing connects the free ends 16a, 18a in a leak-tight manner and is movable with respect to each free end 16a, 18a of the tubular sleeves 16, 18.

According to the represented embodiment, the bushing 20 is slidably linked with the free end 16a of the first tubular sleeve 16 and is articulated with the free end 18a of the second tubular sleeve 18 by a ball joint connection.

The bushing 20 comprises a radially outer annular face 22 which cooperates with an inner annular face 24 of the free end 16a of the first sleeve 16 and a radially inner annular face 26 which cooperates with an outer annular face 28 of the free end 18a of the second sleeve 18.

The annular faces 22, 24 of the bushing 20 and the free end 16a of the first sleeve 16 are complementary one to the other.

The annular faces 26, 28 of the bushing 20 and the free end 18a of the second sleeve 18 are complementary one to the other.

To implement the slidably link between the free end 16a of the first sleeve 16 and the bushing, the annular faces 22, 24 of the bushing 20 and the free end 16a of the first sleeve 16 are cylindrical and they are coaxial to the main axis A of the first sleeve 16.

Then, the bushing 20 is free to translate inside of the free end 16a of the first sleeve 16.

The ball joint connection between the free end 18a of the second sleeve 18 and the bushing is implemented by the spherical shape of the annular faces 26, 28 of the bushing 20 and the free end 18a of the second sleeve 18.

Theses faces have the shape of a portion of a sphere which center is located on the axis B of the second sleeve 18.

Then, the bushing 20 is free to rotate with respect to the free end 18a of the second sleeve 18 around this center of the sphere.

The combination of the two linking means permits a translation of the free end 18a of the second sleeve 18 with respect to the free end 16a of the first sleeve 16 along the main axis 1 of the first sleeve 16 and a rotation of the free end 18a of the second sleeve 18 with respect to the free end 16a of the first sleeve 16 around a rotational center, which is the center of the sphere making up the annular faces 26, 28 of the bushing 20 and the free end 18a of the second sleeve 18, and which is located on the main axis B of the second sleeve 18.

Accordingly, it is possible to adjust the axial distance, along the main axis 1 of the first sleeve 16, between the first flange 12 and the second flange 14, thanks to the translation link. It is also possible to adjust the inclination or the rotation of the first flange 12 with respect to the second flange 14 thanks to the ball joint connection.

As can be seen on fig. 2, the inner annular face 26 of the bushing 20 has a spherical shape and is concave opened inward. To permit the insertion of the free end 18a of the second sleeve 18, which is convex and bulging outward, the bushing 20 comprises an annular mounting part 30, which is fixed, here by screws 32 on an axial end 20a of the bushing 20.

The mounting part 30 is annular, coaxial with the bushing 20 and comprises an inner annular face 34 which constitutes a portion of the inner annular face 26 of the bushing 20.

When the mounting part 30 is removed from the bushing 20, the inner annular face 26 of the bushing 20 is opened axially towards the second sleeve 18. It is then possible to introduce the free end 18a of the second sleeve 18 inside the bushing 20.

Next, the mounting part 30 is fixed to the bushing 20, completing the inner annular face 26 of the bushing 20 and preventing the free end 18a of the second sleeve 18 from going out of the bushing 20.

The surface preparation of the inner annular face 24 of the free end 16a of the first sleeve 16, of the outer annular face 22 and the inner annular face 26 of the bushing 20, and of the outer annular face of the free end 18a of the second sleeve 18 is very smooth to allow a relative movement of the various parts 16, 18, 20 one relative to the other.

As mentioned before, the link between the bushing 20 and each end 16a, 18a of the sleeves 16, 18 is leak-tight, preventing any gas leak at the connection device 10.

The connection device 10 comprises sealing means arranged between the bushing 20 and each end 16a, 18a of the sleeves 16, 18. Here, the sealing means consist in several O-rings 36 which are disposed between the outer annular face 22 of the bushing 20 and the inner annular face 24 of the free end 16a of the first sleeve 16 or between the inner annular face 26 of the bushing 20 and the outer annular face of the free end 18a of the second sleeve 18.

Moreover, according to the represented embodiment, each of the outer annular face 22 of the bushing 20 and of the outer annular face of the free end 18a of the second sleeve 18 comprises two recesses 38 in which an 0-ring 36 is arranged.

As explained above, the flanges 12, 14 of the connection device 10 are freely movable one relative to the other.

In order to add a rigidity to the assembly of the two pieces of equipment, the connection device 10 also comprises a plurality of tie rods (not shown) directly connecting the flanges 12, 14.

Each tie rod is designed so that its length can be modified in order to adjust the their length to the position of the flanges relative to each other and to rigidify the connection device once the flanges 12, 14 are at the chosen relative position.

Each tie rod cooperates with each of the flanges 12, 14 by means of a spherical washer. This kind of washer compensates the respective inclination of the rod with respect to the flange 12, 14.

The use of a connection device 10 as previously disclosed permits an adjustment of the distance between the two flanges 12, 14 in the axial direction, along the main axis A of the first sleeve 16.

However, in the electrical installation, in which the connection device is to be implemented, the casings of two pieces of equipment can be offset radially with respect to the main axis A of the first sleeve.

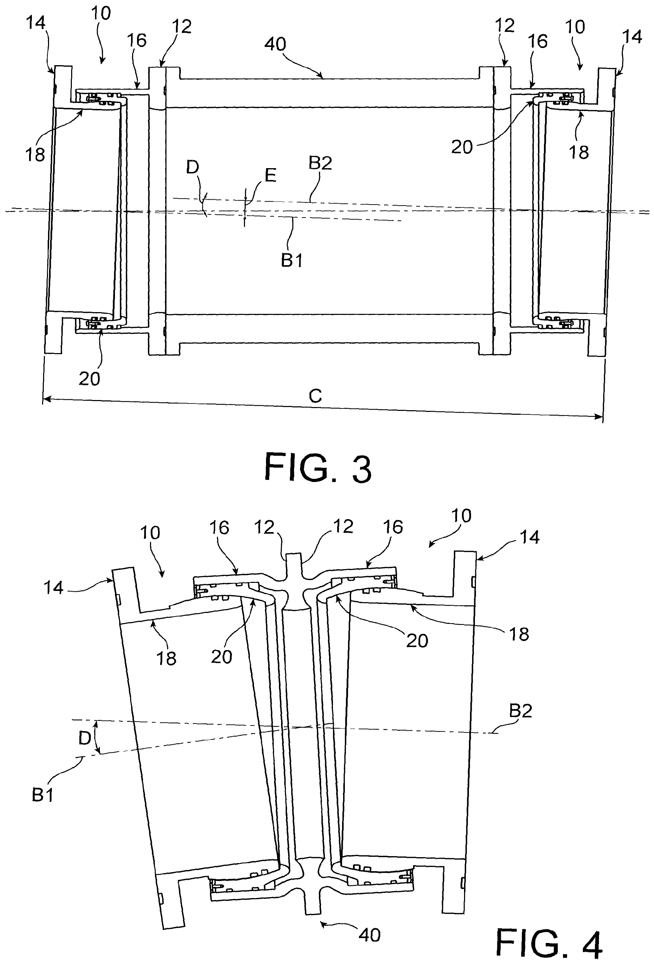

In order to allow the connection of the two casings despite this radial offset, and as represented on figs. 3 and 4, the casings of the installation are connected by two connection devices 10 arranged one after the other.

This arrangement combines two angular corrections to compensate for each case of misalignment of the two casings.

A first one of the two connection devices 10 is connected to the casing of a first piece of equipment by one flange, the second connection device 10 is connected to the casing of the second piece of equipment by on flange and the two connection devices 10 are connected one to the other by the two other flanges.

As represented on figs. 3 and 4, each one of the two connection devices 10 is connected to the casing of a piece of equipment by the second flange 14, which is articulated with the bushing 20, and the two connection devices 10 are connected one to the other by their first flange 12, which is slidably linked to the bushing 20.

As represented on fig. 3, the two first flanges 12 are designed to be directly fixed one to the other, for example by means of bolts.

According to another way for fixing the two flanges one to the other, an intermediary flange 40 is arranged between the two first flanges 12. Also, the two first flanges 12 are fixed to this intermediary flange 40.

This intermediary flange 40 can be tubular, the length of which being determined so as to obtain the total distance C as represented on fig 3.

According to a preferred embodiment, the two first flanges 12 and the intermediary flange 40 are tree parts of a single piece, as can be seen in fig. 4.

According to a variant embodiment (not shown), each one of the two connection devices 10 is connected to the casing of a piece of equipment by the first flange 12, which is slidably linked to the bushing 20, and the two connection devices 10 are connected one to the other by their second flange 14, which is articulated with the bushing 20.

Here again, the second flanges 14 of the two connection devices 10 can be connected together directly, by means of an intermediary flange 40 or by being part of a single piece with the intermediary flange 40.

As can be seen on figs. 3 and 4, the use of two connection devices 10 arranged in line allows a relative inclination of the two pieces of equipment.

This relative inclination is the angle D between the main axes B1, B2 of the flanges that are fixed on the openings of the casings, here the second flanges 14 of the connection devices 10.

Also, as can be seen on fig 3, using two connection devices 10 arranged in line allows a radial offset "E" of the two flanges 14, thanks to the combination of the two articulations and the two sliding links.

## Claims

1. A connection device (10) for connecting together two pieces of gas-insulated equipment,
the connection device comprising a first flange (12) and a second flange (14),
a first tubular sleeve (16) extending from the first flange (12) towards the second flange (14),
a second tubular sleeve (18) extending from the second flange (14) towards the first flange (12),
wherein a free end (16a) of the first tubular sleeve (16) is connected in a leak-tight manner with a free end (18a) of the second tubular sleeve (18),
**characterized in that** the connection device (10) further comprises an annular bushing (20) which connects in leak-tight manner the free ends (16a, 18a) of the two tubular sleeves (16, 18) and **in that**
said bushing (20) is slidably linked with the free end (16a) of the first tubular sleeve (16) and is articulated with the free end (18a) of the second tubular sleeve (18) by a ball joint connection.

2. The connection device (10) according to claim 1, **characterized in that** a first face (22) of the bushing (20) is cylindrical and cooperates with a complementary cylindrical face (24) of the free (16a) end of said first tubular sleeve (16).

3. The connection device (10) according to claim 1 or 2, **characterized in that** a second face (26) of the bushing (20) has a spherical shape and cooperates with a complementary spherically shaped face (28) of the free end (18a) of said second tubular sleeve (18).

4. The connection device (10) according to claim 2 and 3, **characterized in that** the first face (22) of the bushing (20) is a radially outer annular face of the bushing (20) and the second face (26) of the bushing (20) is a radially inner annular face of the bushing (20).

5. The connection device (10) according to claim 4, **characterized in that** the free end (16a) of the first tubular sleeve (16) comprises a radially inner annular face (24) which is cylindrical, the main axis of which is a main axis (A) of the first tubular sleeve (16) and which cooperates and contacts with the first face (22) of the bushing (20).

6. The connection device (10) according to claim 4 or 5, **characterized in that** the second face (26) of the bushing (20) is of a concave shape and the free end (18a) of the second tubular sleeve (18) comprises a radially outer annular face (28) which is convex, bulging outwards and of a spherical shape, which cooperates and contacts with the second face (26) of the bushing (20).

7. The connection device (10) according to any of preceding claims, **characterized in that** it comprises a plurality of annular gaskets (38) arranged between the bushing (20) and each free end (16a, 18a) of the tubular sleeves 16, 18).

8. The connection device (10) according to any of preceding claims, **characterized in that** it further comprises a plurality of tie rods, each tie rod being of a length that may be modified in order to adjust the length of the tie rods according to the respective position of the flanges (12, 14) relative to each other and each tie rod configured to cooperate with each flange by means of a spherical washer.

9. An electrical installation for transporting high voltage electricity comprising a first piece of equipment comprising a casing and an opening arranged on said casing, and a second piece of equipment comprising a casing and an opening arranged on said casing, wherein the two pieces of equipment are connected to one another,
**characterized in that** it comprises a connection device (10) according to any of preceding claims wherein the first flange (12) is connected to the opening of the first piece of equipment and the second flange (14) is connected to the opening of the second piece of equipment.

10. An electrical installation for transporting high voltage electricity comprising a first piece of equipment comprising a casing and an opening arranged on said casing, and a second piece of equipment comprising a casing and an opening arranged on said casing, wherein the two pieces of equipment are connected to one another,
**characterized in that** it comprises two connection devices (10) according to any of claims 1 to 8, wherein the first flange (12) of each connection - device (10) is connected to the opening of each one of the first piece of equipment and the second piece of equipment,
and the second flanges (14) of the two connection devices (10) are connected one to another.

11. An electrical installation according to claim 10, **characterized in that** the second flanges (14) of the two connection devices (10) are connected to an intermediary flange (40).

12. An electrical installation according to claim 11, **characterized in that** the two second flanges (14) and the intermediary flange (40) are parts of a single piece.

13. An electrical installation for transporting high voltage electricity comprising a first piece of equipment comprising a' casing and an opening arranged on said casing, and a second piece of equipment comprising a casing and an opening arranged on said casing, wherein the two pieces of equipment are connected to one another,
**characterized in that** it comprises two connection devices (10) according to any of claims 1 to 8, wherein the second flange (14) of each connection device (10) is connected to the opening of each one of the first piece of equipment and the second piece of equipment,
and the first flanges (12) of the two connection devices (10) are connected one to another.

14. An electrical installation according to claim 13, **characterized in that** the first flanges (12) of the two connection devices (10) are connected to an intermediary flange (40).

15. An electrical installation according to claim 14, **characterized in that** the two first flanges (12) and the intermediary flange (40) are parts of a single piece.
